# EUROPÄISCHE PATENTANMELDUNG

(11) **EP 2 614 920 A1**
(43) Veröffentlichungstag der Anmeldung: **17.07.2013**
(21) Anmeldenummer: 12150752.9
(22) Anmeldetag: 11.01.2012
(51) Int. Cl.: B23K 35/30, C23C 4/08, F01D 5/00, B23K 26/34, B23P 6/00

(54) **Schweißverfahren mit unterschiedlichem Schweißmaterial, Vorrichtung dafür sowie Bauteil**

(71) Anmelder: Siemens Aktiengesellschaft, 80333 München (DE); Fraunhofer-Gesellschaft zur Förderung der angewandten Forschung e.V., 80686 München (DE)
(72) Erfinder: Melzer-Jokisch, Torsten, 15366 Neuenhagen bei Berlin (DE); Ott, Michael, 45470 Mülheim an der Ruhr (DE); Burbaum, Bernd, 14612 Falkensee (DE); Gasser, Andres, 52066 Aachen (DE); Pirch, Norbert, 52074 Aachen (DE)

(57) **Zusammenfassung**

Durch die Verwendung von verschiedenen Schweißpulvern (7, 10), die mittels einer entsprechenden Vorrichtung (1) aufgetragen werden, weist das vorhandene Bauteil nur in den Bereichen mit höherer Belastungen einen höheren γ'-Anteil der Auftragsschweißung auf, so dass dadurch die Rissbildung in der Auftragsschweißung oder zu der Auftragsschweißung in dem Substrat reduziert wird.

## Beschreibung

Die Erfindung betrifft ein Schweißverfahren, bei dem unterschiedliche Schweißmaterialien auf das Bauteil aufgebracht werden sowie eine dazu notwendige Vorrichtung und ein Bauteil.

Bei der Reparatur von Turbinenkomponenten, die aus nickelbasierten Superlegierungen bestehen und einen hohen γ'-Gehalt aufweisen, ist die Wärmeeinbringung in Bezug auf Rissbildung eine große Herausforderung. Aus diesem Grund ist die Art der Wärmeeinbringung und -führung von entscheidender Bedeutung. Je weniger Wärme insgesamt eingebracht wird, desto geringer ist die Wahrscheinlichkeit, dass sich Risse bilden.

Zum Einen wird derzeit durch Vorwärmung das Grundmaterial an das Temperaturfeld des Schweißgutes herangeführt, so dass Temperaturgradienten und thermische Spannungen reduziert werden. Die gleichförmige Abkühlung bzw. weitere Wärmebehandlungen sorgen für spannungsarmes (rissminimiertes) Schweißen. Das bevorzugte Schweißen bei Raumtemperatur beinhaltet das "Einfrieren" von Gefügezuständen durch sehr hohe Temperaturgradienten. Dies wird durch Kühlen der Vorrichtungen und/oder durch geringe Auftragsraten an Schweißzusatz mit Zwischenkühlung erzeugt. Materialbedingt sind immer wieder Risse festzustellen.

Es ist daher Aufgabe der Erfindung, ein Schweißverfahren, eine Vorrichtung und ein Bauteil aufzuzeigen, bei dem oben genannte Probleme gelöst werden.

Die Aufgabe wird gelöst durch ein Verfahren gemäß Anspruch 1, eine Vorrichtung gemäß Anspruch 6 und ein Bauteil gemäß Anspruch 10.

In den Unteransprüchen sind weitere vorteilhafte Maßnahmen aufgelistet, die beliebig miteinander kombiniert werden können, um weitere Vorteile zu erzielen.

Es zeigen:
- Figur 1, 4: Vorrichtungen zur Durchführung des erfindungsgemäßen Verfahren
- Figur 2, 3: eine Oberfläche eines Bauteils mit verschiedenen Schweißpulvern,
- Figur 5: eine Turbinenschaufel,
- Figur 6: eine Brennkammer und

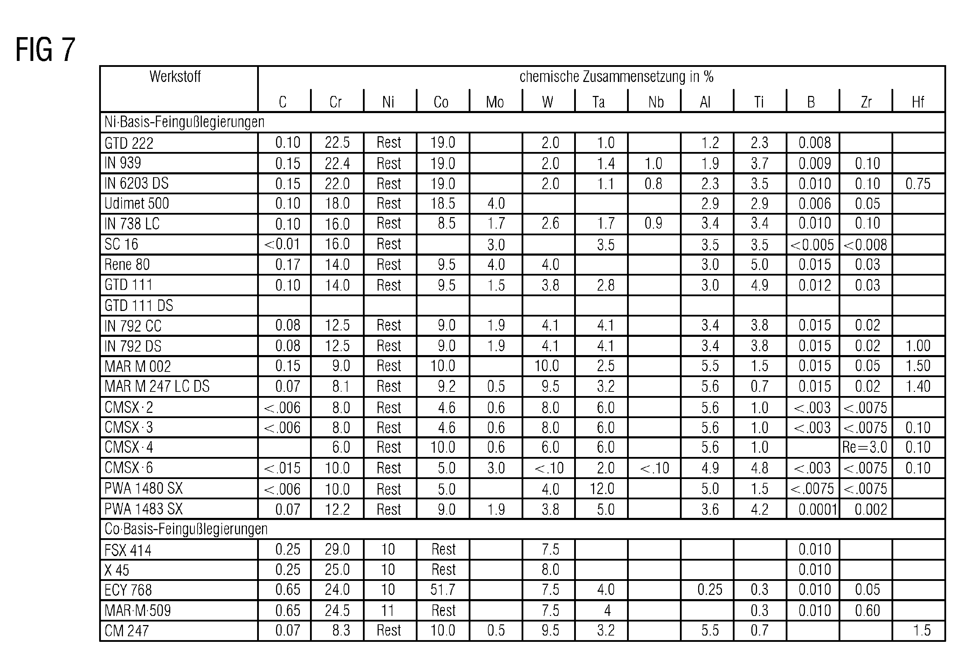

- Figur 7: eine Liste von Superlegierungen.

Die Beschreibung und die Figuren stellen nur Ausführungsbeispiele der Erfindung dar.

Es werden an die Belastung des Bauteils 1, 120, 130 angepasste Schweißmaterialien 7, 10, insbesondere in Pulverform aufgebracht, d.h., dass in Bereichen 11, 11', 11'', ... der γ'-Gehalt geringer ist und die Anzahl der Bereiche 11, 11', 11'', ... in den Gebieten der zu schweißenden Fläche höher ist, wo eine geringere Temperaturbelastung gegeben ist. Dementsprechend sind Bereiche 8', 8'', ... mit höherem γ'-Gehalt verstärkt in Gebieten der zu schweißenden Fläche mit höherer Temperaturbelastung aufgeschweißt.

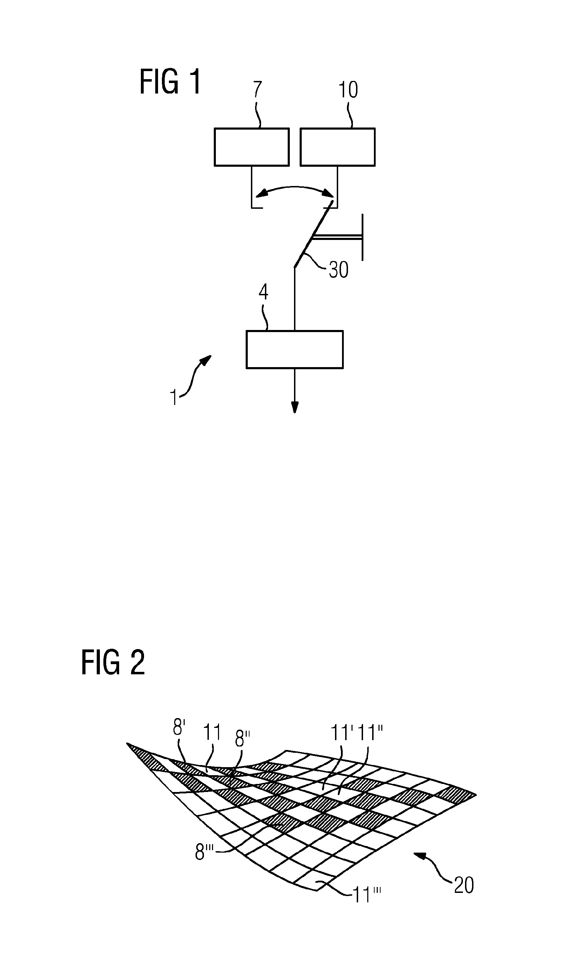

Dies kann dadurch erfolgen, dass die Fläche insbesondere schachbrettartig in Bereiche 8', 8'', ... 11, 11', 11'', ... aufgeteilt wird, wobei die einzelnen Bereiche 8', 8'', ... 11, 11', 11" (Figur 2) mit unterschiedlichen Materialien geschweißt werden.

Die Materialien sind zum einen eine Legierung aus einem höherfesten Material (gemessen am höheren γ'-Anteil) und zum anderen eine Legierung aus einem niederfesten (niedrigerer γ'-Anteil) Material.

Die Belegung der Bereiche 8', 8'', ... 11, 11', 11" wird je nach Position und ermitteltem (gerechnetem) Spannungszustand am Bauteil 1, 120, 130, festgelegt.

Somit wird ein, dem Belastungskollektiv angepasstes Material, insbesondere Pulver, bereitgestellt und Schweißgut aufgebracht.

Die Wahrscheinlichkeit für Risse wird somit weiter herabgesetzt.

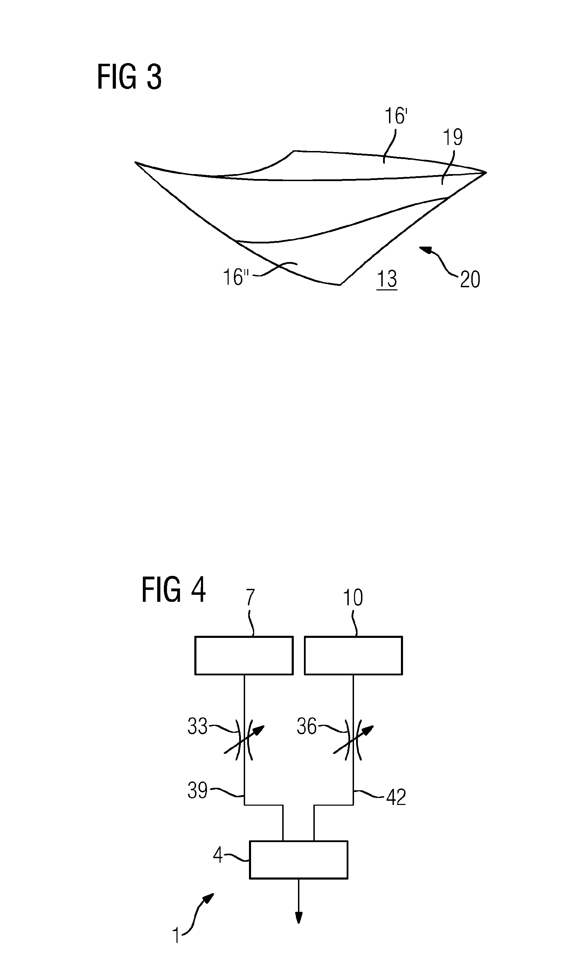

Der γ'-Gehalt wird angemischt oder direkt durch Umschalten zwischen zwei Behältern mit verschiedenen Schweißpulvern 7, 10 verwendet (siehe Fig. 1, 4).

Figur 1 zeigt eine Vorrichtung 1 mit einer Schweißdüse 4, die ein Material, vorzugsweise Pulver aufschmilzt und auf eine Oberfläche 13 aufträgt und eine Auftragsschweißung erzeugt.

Die Schweißdüse 4 wird mit unterschiedlichen Schweißmaterialien 7, 10 versorgt, wobei über Zuführungen, die entweder oder zwischen den zwei Materialien 7, 10 mittels eines Schalters 30 hin und her geschaltet wird oder im Falle von Pulvern über Ventile 33, 36 (Fig. 4), die die Anteile variabel untereinander regeln, versorgt wird.

Das eine Schweißmaterial 10 weist einen hohen γ'-Anteil auf, das andere Schweißmaterial 7 einen niedrigeren γ'-Anteil, vorzugsweise um mindestens 10%, ganz insbesondere mindestens 20%.

Figur 2 zeigt eine Oberfläche 13 (Schweißstelle), die mit dem erfindungsgemäßen Verfahren bearbeitet wurde.

Die dunklen Bereiche 8', 8'', ... und die hellen Bereiche 11, 11', 11'', ... weisen jeweils ein anderes Schweißmaterial auf. Dort, wo eine höhere Belastung in dem Bauteil 120, 130 zu erwarten ist, wird mehr Schweißpulver mit hohem γ'-Anteil aufgetragen; dort, wo die Belastungen im Bauteil später geringer sind, wird mehr Schweißpulver mit dem niedrigeren γ'-Anteil aufgetragen.

Die Verteilung des unterschiedlichen Schweißmaterials 7, 10 ist vorzugsweise mosaikartig, vorzugsweise schachbrettmusterartig ausgebildet, d.h., in einer Schweißlage sind verschiedene Schweißlegierungen 7, 10 vorhanden. Dort, wo die Belastung des Bauteils 120, 130 höher ist, sind mehr Bereiche 8', 8'', ... bzw. Schachbrettfelder mit höherfestem Schweißmaterial 10 vorhanden. Dort, wo die Belastung des Bauteils niedriger ist, werden die Schachbrettfelder mehr und mehr nur mit niedrig leitendem Schweißmaterial 7 befüllt.

Insgesamt liegt also eine ungleichmäßige Verteilung der verschieden Schweißmaterialien 7, 10 vor.

Ebenso kann auch ein größerer, flächiger Bereich 16', 16" mit einem ersten Schweißmaterial 7 und an anderer Stelle 19 mit einem zweiten Schweißmaterial 10, das einen höheren y'-Anteil aufweist, vorhanden sein (Figur 3) bzw. umgekehrt.

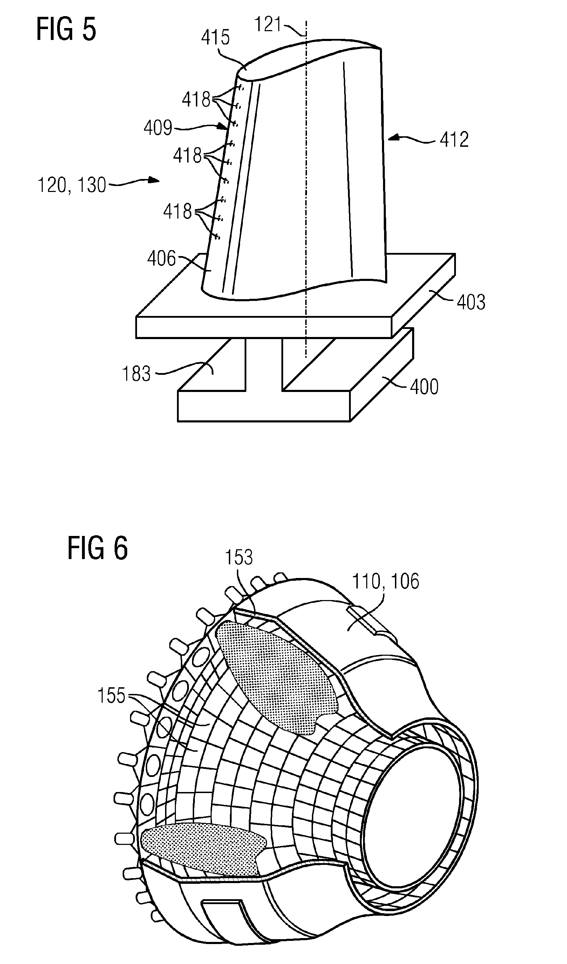

Das Bauteil ist vorzugsweise eine Turbinenschaufel 120, 130, insbesondere eine Gasturbine und weist insbesondere eine Superlegierung aus Nickelbasis auf, ganz insbesondere gemäß Figur 6.

Als Schweißpulver mit dem hohen γ'-Anteil kann das gleiche Pulver, artgleiches oder anderes Schweißpulver verwendet werden.

Vorzugsweise weist das Schweißpulver, das den höheren y'-Anteil aufweist, den gleichen oder einen höchstens um 60% niedrigeren γ'-Anteil als das Substrats 20 des Bauteils 1, 120, 130 auf.

Als Schweißpulver können je nach Substrat alle möglichen bekannten nickelbasierten Schweißpulver oder Nickelbasissuperlegierungen verwendet werden.

Die Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 6 zeigt eine Brennkammer 110 einer Gasturbine. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

## Patentansprüche

1. Verfahren zum Auftragsschweißen auf ein Substrat (20), bei dem verschiedene Schweißpulver (7, 10) für das Substrat (20) für eine Schweißstelle (10) verwendet werden.

2. Verfahren nach Anspruch 1,
bei dem das Substrat (20) nickel- oder kobaltbasiert ist, bei dem die verschiedenen Schweißpulver (7, 10) nickelbasiert sind und
verschiedene Anteile der γ'-Phase aufweisen,
insbesondere ein Unterschied in der γ'-Phase von mindestens 10%,
ganz insbesondere von mindestens 20% in der γ'-Phase aufweisen.

3. Verfahren nach einem oder beiden der Ansprüche 1 oder 2, bei dem die verschiedenen Schweißpulver (7, 10) an verschiedenen Stellen (8', 8'', ..., 11, 11', ..., 16', 16'', 19) einer Schweißstelle (13) aufgebracht werden.

4. Verfahren nach einem oder mehreren der Ansprüche 1 bis 3,
bei dem die verschiedenen Schweißpulver (7, 10) mosaikartig (8', 8'', ..., 11, 11', ...) verteilt sind.

5. Verfahren nach einem oder mehreren der vorherigen Ansprüche,
bei dem die verschiedenen Schweißpulver (7, 10) ungleichmäßig verteilt werden.

6. Vorrichtung (1),
die eine Schweißdüse (4) aufweist,
in der ein Material,
insbesondere Pulver,
aufschmelzen kann und
mit zwei verschiedenen Schweißpulvern (7, 10) versorgt werden kann.

7. Vorrichtung nach Anspruch 6,
bei dem der Anteil an dem Schweißpulver (7, 10),
das durch die Schweißdüse (4) gelangt,
variabel eingestellt werden kann.

8. Vorrichtung nach einem oder beiden der Ansprüche 6 oder 7,
bei der zwischen zwei Behältern mit verschiedenen Schweißpulvern (7, 10) hin und her geschaltet werden kann.

9. Vorrichtung nach einem oder beiden der Ansprüche 6 oder 7,
bei der die Schweißdüse (4) zwei Zuleitungen (39, 42) zu Behältern verschiedener Schweißpulver (7, 10) aufweist und die Zuleitungen (39, 42) Ventile (33, 30) aufweisen.

10. Bauteil (1, 120, 130),
das eine Auftragsschweißung aufweist,
die zumindest eine Schweißstelle aus verschiedenen Schweißlegierungen (7, 10) aufweist,
die um mindestens 10% verschiedene γ'-Anteile einer nickelbasierten Legierung aufweist,
ganz insbesondere um mindestens 20% verschieden.

11. Bauteil (1, 120, 130) nach Anspruch 10,
bei dem die Auftragsschweißung in einer Schweißstelle (13) Bereiche (8', 8'', 8'"..., 11, 11', 11'', 11"', ..., 16', 16") mit verschiedenen Zusammensetzungen aufweist, die mosaikartig ausgebildet sind.

12. Bauteil nach einem oder beiden der Ansprüche 10 oder 11, bei dem die Auftragsschweißung in verschiedene Bereiche (8', 8'', ..., 11, 11', 11'', ...) ,
insbesondere rechteckig aufgeteilt ist,
wobei die Bereiche (8', ..., 11, ...) verschiedene Zusammensetzungen (7, 10) aufweisen und
direkt benachbarte Bereiche nicht die gleichen Zusammensetzungen aufweisen.

13. Bauteil nach einem oder mehreren der Ansprüche 11, 12 oder 13,
bei der die Auftragsschweißung auf Stellen (8', 8", ...) des Substrats (20) aufgetragen wird, die im Einsatz hohe und Temperaturen erfahren und auf Stellen (11, 11', ...) des Substrats (20) aufgetragen wird, die im Einsatz niedrigere Temperaturen erfahren, und
der Anteil des Schweißpulvers mit dem hohen γ'-Anteil in dem Bereich mit der höheren Temperaturbelastung höher ist.

14. Bauteil nach einem oder mehreren der Ansprüche 10, 11, 12 oder 13,
das ein nickel- oder kobaltbasiertes Substrat (20) aufweist.
